# FASCICULE DE BREVET EUROPEEN

(11) **EP 0 702 999 B1**
(45) Date de publication et mention de la délivrance du brevet: **29.04.1998**
(21) Numéro de dépôt: 95402137.4
(22) Date de dépôt: 22.09.1995
(51) Int. Cl.: B01J 2/30, C05G 3/00

(54) **Composition simultanément antimottante et hydrophobante pour sels, engrais simples et complexes et procédé de mise en oeuvre**
Hydrophobe Zusammensetzungen zur Verhinderung des Zusammenbakens von Salzen und Ein- oder Mehrnährstoffdüngern und Verfahren zu ihrer Verwendung
Anti-caking and hydrophobe compositions for salts and single or multinutrient fertilizers and method of use

(30) Priorité: 26.09.1994 FR 9411459
(43) Date de publication de la demande: 27.03.1996
(73) Titulaire: CFPI INDUSTRIES, 92233 Gennevilliers (FR)
(72) Inventeur: Schapira, Joseph, F-75015 Paris (FR); Cheminaud, Jean-Claude, F-95220 Herblay (FR); Petitbon, Pascal, F-95130 Franconville (FR); Imbert, Dominique, F-92400 Courbevoie (FR)
(74) Mandataire: Koch, Gustave

(56) Documents cités:
- EP-A- 0 202 753
- EP-A- 0 341 102
- EP-A- 0 574 306
- EP-A- 0 692 468
- WO-A-93/16793
- FR-A- 2 221 175
- FR-A- 2 460 706
- DATABASE WPI Derwent Publications Ltd., London, GB; AN 86-065685 & JP-A-61 017 486 (KAO CORP.) , 25 Janvier 1986

## Description

L'invention a pour objet une composition simultanément antimottante et hydrophobante pour sels, engrais simples et complexes.

Elle vise également un procédé permettant de conférer des propriétés antimottantes et hydrophobantes à des sels, engrais simples et engrais complexes et consistant en la mise en oeuvre de la susdite composition.

Elle vise enfin les sels, engrais simples et complexes dont les particules constitutives comportent un revêtement qui est à base de la composition conforme à l'invention.

Les susdits sels, engrais simples et complexes sont choisis dans le groupe comprenant les nitrates d'ammonium, de potassium et de calcium, les phosphates de mono- et de diammonium, le phosphate de calcium, le chlorure et le sulfate de potassium, l'urée et le sulfate d'ammonium.

Il est connu de l'homme du métier que le stockage des sels, des engrais simples et des engrais complexes, présentés la plupart du temps sous forme de granules, pose des problèmes considérables en atmosphère humide en dépit des traitements d'antimottage appliqués avant stockage aux produits en question.

Lesdits produits font preuve en effet, fréquemment dans ces conditions, d'une tendance à la reprise d'humidité qui se traduit essentiellement par une dégranulation ou par la formation d'une croûte plus ou moins dure et par la formation, au sein de la masse de granules, de ce qui dans le métier est désigné par le terme de "chandelles".

L'invention a donc pour but, surtout, de remédier à cet inconvénient et de mettre à la disposition de l'utilisateur des moyens, c'est-à-dire une composition et un procédé permettant non seulement d'empêcher les produits en question de motter mais également de lutter contre la reprise d'humidité par ces produits lorsqu'ils sont stockés en atmosphère humide, autrement dit de leur conférer des propriétés hydrophobantes.

Et le mérite de la Société Demanderesse est d'avoir trouvé, à l'issue de recherches approfondies, que ce but était atteint de façon tout à fait surprenante et inattendue dès lors que l'on combine à certaines compositions antimottantes, en elles-mêmes connues, une substance antimottante capable de conférer des propriétés hydrophobantes, cette substance antimottante étant constituée par le produit de la réaction d'un alcool ou d'une amine avec un acide ou anhydride carboxylique portant un groupe hydrocarboné ayant de 20 à 500 atomes de carbone.

Il s'ensuit que la composition simultanément antimottante et hydrophobante pour sels, engrais simples et complexes, est caractérisée par le fait qu'elle comporte:
- d'une part, un produit antimottant choisi parmi les amines grasses, les sels d'amines d'esters phosphoriques, les sels d'amines d'acides alkylarylsulfoniques et leurs mélanges et
- d'autre part, une substance antimottante capable de conférer aux sels, engrais simples et complexes traités une résistance suffisante à la reprise d'humidité, cette substance étant constituée par le produit de la réaction d'un alcool, d'une amine ou d'une alcanolamine, avec un acide polyalkényl-succinique ou son anhydride portant un groupe hydrocarboné ayant de 20 à 500 atomes de carbone, représentés respectivement par les formules suivantes: 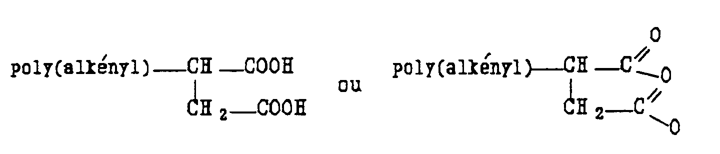 de préférence avec l'acide polyisobutényl-succinique également connu sous l'appellation PIBSA ou son anhydride portant un groupe hydrocarboné ayant de 20 à 500 atomes de carbone.

Cette substance antimottante est décrite comme antimottant dans la demande de brevet européen N° 0 202 753 qui la présente comme conférant à des matériaux sous forme de particules présentant une tendance au mottage, un enrobage antimottant dont la surface extérieure est, comme celle des enrobages antimottants obtenus par traitement avec les amines grasses ou avec des alkyl-arylsulfonates, de nature lipophile, autrement dit hydrophobe.

L'utilisation des agents décrits dans ce brevet européen pour lutter contre la reprise d'humidité par des engrais ne présentant par eux-mêmes aucune tendance au mottage a déjà été décrite dans le document EP-A-0 692 468 dont la Société Demanderesse est titulaire et qui a été publié après la date de dépôt de la présente demande.

Or, il est bien connu de l'homme du métier que ces enrobages antimottants à surface extérieure lipophile classiquement obtenus par traitement des particules à antimotter avec des amines grasses ou avec des alkylarylsulfonates, ne confèrent pas à ces particules une résistance suffisante à la reprise d'humidité.

L'homme du métier n'était donc nullement incité à rechercher une telle propriété dans le cas de la famille d'agents antimottants constitués par les produits définis plus haut, ce qui souligne le caractère inattendu et surprenant du résultat des recherches de la Société Demanderesse.

Selon un autre mode de réalisation avantageux de la composition antimottante et hydrophobante conforme à l'invention, l'amine grasse est choisie dans le groupe de celles représentées par la formule RNH₂ dans laquelle R est un groupe alkyle ou alkylène, linéaire ou ramifié, ayant de 10 à 24 atomes de carbone et, de préférence, dans le groupe constitué par les amines grasses hydrogénées ayant des chaînes alkyle en C₁₆ à C₂₂.

Selon un autre mode de réalisation avantageux de la composition antimottante et hydrophobante conforme à l'invention, l'acide ester phosphorique est un composé pouvant être préparé par réaction directe d'un composé à groupement hydroxyle tel qu'un alcool, un alcoylphénol ou un alcoylnaphtol avec par exemple l'anhydride phosphorique, ledit composé étant représenté par les formules générales: 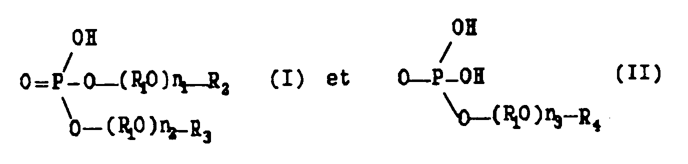 dans lesquelles
- R₁ représente un groupement alcoylène ayant de 2 à 4 atomes de carbone,
- R₂, R₃, R₄ représentent chacun un groupe alcoyle ayant de 8 à 20 atomes de carbone ou un groupe alcoylaryle dont la partie alcoylée a de 8 à 12 atomes de carbone,
- n₁, n₂, n₃ représentent un nombre de 0 à 15 et préférentiellement de 0 à 5.

Ces composés se présentent généralement sous la forme de mélanges de mono- et diester.

Les meilleurs résultats sont atteints lorsque l'on utilise des alkylphosphates dont la partie alcoyle est constituée de 8 à 20 atomes de carbone.

Suivant un autre mode de réalisation avantageux de la composition antimottante et hydrophobante conforme à l'invention, l'acide alkylarylsulfonique est choisi dans le groupe comprenant les acides mono-, di- ou trisulfoniques dont la partie aromatique, de préférence benzoique ou naphtalénique, plus particulièrement naphtalénique, est mono- ou polyalcoyle substitué, le degré de substitution étant un degré moyen correspondant aux rapports molaires alcoyle/aryle utilisés pour la synthèse, étant entendu que, pour chacun des degrés de substitution envisagés, à savoir généralement de 1 à 4, il est possible de se trouver en présence de mélanges complexes d'isomères d'acides sulfoniques, le nombre total d'atomes de carbone de la partie alcoyle ne dépassant de préférence pas 16 dans les mélanges en question.

Suivant un autre mode de réalisation avantageux de la composition antimottante et hydrophobante conforme à l'invention, celle-ci comprend une combinaison de sels d'amines d'ester de phosphates acides et d'acides alcoylaryl-sulfoniques selon le brevet français N° 2 629 815 déposé le 7 avril 1988 par la Demanderesse, cette combinaison étant caractérisée par le fait qu'elle comprend un ou plusieurs sels d'amines d'acides alcoylaryl-sulfoniques et un ou plusieurs sels d'amines d'esters de phosphates acides, en présence éventuellement d'un excès d'amine.

Selon un autre mode de réalisation avantageux de la composition antimottante et hydrophobante conforme à l'invention, celle-ci comprend de 5 à 35%, de préférence de 5 à 20% et, plus préférentiellement encore, de 5 à 15% en poids de la substance antimottante choisie parmi les amines grasses, les sels d'amines d'esters phosphoriques, les sels d'amines d'acides alkylarylsulfoniques et leurs mélanges, et de 0,1 à 10%, de préférence de 1 à 5% en poids de la substance antimottante constituée par le produit de la réaction d'un alcool ou d'une amine avec un acide ou anhydride carboxylique portant un groupe hydrocarboné ayant de 20 à 500 atomes de carbone.

Les compositions conformes à l'invention sont avantageusement formulées dans des huiles et des cires.

Les huiles minérales sont choisies de préférence parmi celles à caractère paraffinique ou naphténique dont la viscosité à 40°C se situe entre 15 et 800 mm²/s et préférentiellement entre 20 et 150 mm²/s.

Les cires sont choisies préférentiellement parmi les cires macrocristallines ou les mélanges de cires microcristallines et macrocristallines.

Les cires étant caractérisées par leur point de fusion, la cire ou le mélange de cires utilisé dans les compositions conformes à l'invention a un point de fusion pouvant se situer entre 45 et 100°C, préférentiellement de 48 à 80°C.

Selon un autre mode de réalisation avantageux de la composition antimottante et hydrophobante conforme à l'invention, celle-ci comporte de 55 à 95%, de préférence de 75 à 95% ou encore, plus préférentiellement, de 80 à 92% en poids d'agents de formulation constitués par les huiles et/ou cires identifiées plus haut.

Le procédé conforme à l'invention, propre à conférer à des sels, engrais simples et complexes, des propriétés antimottantes et hydrophobantes, est caractérisé par le fait que l'on applique par pulvérisation sur lesdits sels, engrais simples et complexes, une quantité efficace de la composition conforme à l'invention.

Selon un mode de réalisation avantageux du procédé conforme à l'invention, on applique la composition conforme à l'invention à une température à laquelle elle est liquide en une quantité de 200 à 4000 g par tonne de sel, engrais simple ou complexe, de préférence en une quantité de 300 à 2000 g par tonne de sel, engrais simple ou complexe et, plus préférentiellement encore, en une quantité de 300 à 1500 g par tonne de sel, engrais simple ou complexe.

Il est à noter que la composition et le procédé conformes à l'invention permettent également de lutter contre la formation de poussières.

L'invention pourra être encore mieux comprise à l'aide des exemples comparatifs et non limitatifs qui suivent et dans lesquels sont indiquées des compositions conformes à l'invention ayant donné de bons résultats et correspondant à des modes de réalisation avantageux.

Pour apprécier la qualité tant du point de vue antimottant que du point de vue hydrophobant des traitements appliqués aux engrais soumis aux essais, on procède, d'une part, à un test de mottage et, d'autre part, à deux tests de reprise d'humidité décrits ci-après.

### Test de mottage

L'engrais traité est conditionné dans des sacs en polyéthylène à raison de 10 kg par sac, puis stocké sous pression pendant une durée variable à température contrôlée. Dans le cas de l'exemple 1, les sacs sont maintenus à une température de 25°C sous une charge telle qu'ils subissent une pression de 0,8 kg/cm², ce qui simule un stockage d'une pile d'engrais d'environ 12 mètres de hauteur.

A l'issue du test, les sacs sont ouverts et le mottage est évalué par pesée des mottes et par mesure de leur dureté.

On détermine l'indice de mottage qui correspond au produit du pourcentage de mottage par la moyenne des duretés des mottes.

Plus la valeur de l'indice de mottage désigné par IM est basse, meilleure est la performance de mottage.

Lors d'une absence de mottes, on qualifie l'engrais par le terme de métier de "free flowing".

### Tests de reprise d'humidité

Deux types de tests de reprise d'humidité sont effectués.

Le premier est un test rapide consistant à disposer une couche de granules d'engrais dans un cristallisoir de 6 cm de diamètre, qui est placé dans une enceinte climatique reproduisant (cas de l'exemple 1) les conditions suivantes:
- Humidité relative :: 75%
- Température :: 30°C.

On mesure la quantité d'eau reprise après 24 heures, le résultat est exprimé en pourcentage en poids d'eau reprise.

Le second test consiste à disposer 600 g d'engrais dans un bécher de 800 ml, puis à placer ce bécher dans une enceinte climatique reproduisant (cas de l'exemple 1) les conditions suivantes:
- Humidité relative :: 75%
- Température :: 30°C.

On mesure le pourcentage en poids d'eau absorbée après 72 heures.

De plus, on procède à une observation qualitative de l'aspect de l'engrais après le test et cela en particulier du point de vue de l'apparence physique du grain par évaluation de la dégranulation.

### EXEMPLE 1

L'engrais traité est un nitrate d'ammonium titrant 33,5% en poids d'azote.

On prépare quatre compositions respectivement A, B, C et D (B et D étant des compositions conformes à l'invention) dont la constitution résulte du tableau I:

**TABLEAU I**

| Nature des constituants | Compositions (pourcentage en poids des constituants) | | | |
|---|---|---|---|---|
| | A | B | C | D |
| Stéarylamine | 10 | 10 | - | - |
| Oléylamine | - | - | 10 | 10 |
| Huile minérale de viscosité 20 mPa.s à 40°C | 40 | 40 | 40 | 40 |
| Cire de paraffine point de fusion 50-52°C | 50 | 47 | 50 | 47 |
| Sel d'amine d'un dérivé PIBSA | - | 3 | - | 3 |
| | 100 | 100 | 100 | 100 |

La température de l'engrais est portée à 35°C et celle des compositions A à D à 80°C, température à laquelle elles sont liquides.

Chacune des compositions A à D est pulvérisée à raison de 20 g respectivement sur un échantillon d'engrais de 20 kg (ce qui correspond à 1 kg par tonne d'engrais), la pulvérisation étant effectuée à l'intérieur d'une bétonnière.

Les quatre échantillons d'engrais ainsi traités sont soumis aux tests de mottage et de reprise d'humidité décrits plus haut.

Les résultats obtenus sont réunis dans le tableau II.

**TABLEAU II**

| Composition | TEST DE MOTTAGE | | | Test cristallisoir % reprise d'eau | Test bécher % reprise d'eau | Observations |
|---|---|---|---|---|---|---|
| | % mottage | Dureté (moyenne) en kg | IM | | | |
| Témoin non traité | 100 | >15 | >1500 | 50 | 10 | dégranulation importante |
| A | 20 | 5 | 100 | 19 | 4 | dégranulation moyenne |
| B | 20 | 5 | 100 | 15 | 3 | légère dégranulation |
| C | 50 | 7 | 350 | 16 | 3 | dégranulation moyenne |
| D | 30 | 7 | 12 | 12 | 2,5 | légère dégranulation |

L'examen des résultats réunis dans le tableau II montre l'amélioration apportée au niveau reprise d'humidité par la présence conforme à l'invention d'un dérivé PIBSA dans une composition antimottante à base d'amines grasses.

### EXEMPLE 2

On étudie l'influence de la présence d'un dérivé PIBSA conformément à l'invention dans une composition antimottante à base de sels d'amines d'esters phosphoriques.

L'engrais traité est un nitrate d'ammonium titrant 33,5% en poids d'azote et contenant 0,65% en poids de sulfate d'aluminium (le sulfate d'aluminium est présent à titre d'additif de procédé).

On prépare quatre compositions, respectivement E, F, G et H, les compositions F et H étant conformes à l'invention.

La constitution des compositions E à H résulte du tableau III.

**TABLEAU III**

| Nature des constituants | Compositions (pourcentage en poids des constituants) | | | |
|---|---|---|---|---|
| | E | F | G | H |
| Ethylhexyl phosphate de stéarylamine (50% monoester et 50% diester) | 10 | 10 | - | - |
| Alkyl phosphate de stéarylamine mélange 50% monoester 50% diester alkyl = n.C₁₆C₁₈ | - | - | 10 | 10 |
| Huile minérale de viscosité 20 mPa.s à 40°C | 40 | 40 | 40 | 40 |
| Cire de paraffine point de fusion 50-52°C | 50 | 47 | 50 | 47 |
| Sel d'amine d'un dérivé PIBSA | - | 3 | - | 3 |
| | 100 | 100 | 100 | 100 |

Comme à l'exemple 1 et dans les mêmes conditions, on traite quatre échantillons de 20 kg d'engrais respectivement par 20 g de chacune des compositions E à H.

On effectue les tests de mottage (durée: 7 jours, pression: 1 kg/cm², température: 25°C) et de reprise d'humidité (30°C, l'humidité relative et la durée étant respectivement de 75% et 24 heures pour le test au cristallisoir qui est le seul effectué).

Les résultats sont réunis dans le tableau IV.

**TABLEAU IV**

| Composition | TEST DE MOTTAGE | | | Test cristallisoir % reprise d'eau |
|---|---|---|---|---|
| | % mottage | Dureté (moyenne) en kg | IM | |
| Témoin non traité | 100 | >18 | >1500 | 52 |
| E | 90 | 3 | 270 | 12 |
| F | 90 | 3 | 270 | 8,1 |
| G | 60 | 3,5 | 210 | 15 |
| H | 60 | 3,8 | 228 | 9,8 |

L'examen des résultats réunis dans le tableau IV montre l'amélioration apportée au niveau reprise d'humidité par la présence conforme à l'invention d'un dérivé PIBSA dans une composition antimottante à base de sels d'amines d'esters phosphoriques.

### EXEMPLE III

On étudie l'influence de la présence d'un dérivé PIBSA conformément à l'invention dans une composition antimottante à base de mélanges de sels d'amines d'esters phosphoriques et de sels d'amines d'acides alkylarylsulfoniques.

L'engrais traité est un nitrate d'ammonium titrant 33,5% en poids d'azote et contenant 0,65% en poids de sulfate d'aluminium (le sulfate d'aluminium est présent à titre d'additif de procédé).

On prépare quatre compositions, respectivement I, J, K et L, les compositions J et L étant conformes à l'invention.

La constitution des compositions I à L résulte du tableau V.

**TABLEAU V**

| Nature des constituants | Compositions (pourcentage en poids des constituants) | | | |
|---|---|---|---|---|
| | I | J | K | L |
| Alkyl phosphate de stéarylamine alkyl = n.C₁₂C₁₄ | - | - | 8 | 8 |
| Alkyl phosphate de stéarylamine mélange 50% monoester 50% diester alkyl = n.C₁₆C₁₈ | 8 | 8 | - | - |
| Isopropyl naphtalène sulfonate de stéarylamine | 2 | 2 | 2 | 2 |
| Huile minérale de viscosité 20 mPa.s à 40°C | 40 | 40 | 40 | 40 |
| Cire macrocristalline | 50 | 47 | 50 | 47 |
| Sel d'amine d'un dérivé PIBSA | - | 3 | - | 3 |
| | 100 | 100 | 100 | 100 |

Comme à l'exemple 1 et dans les mêmes conditions, on traite quatre échantillons de 20 kg d'engrais respectivement par 20 g de chacune des compositions I à L.

On effectue les tests de mottage (durée: 7 jours, pression: 1 kg/cm², température: 25°C) et de reprise d'humidité (30°C sous une humidité relative de 70% pendant 24 heures pour le test au cristallisoir et 72 heures pour le test au bécher).

Les résultats sont réunis dans le tableau VI.

**TABLEAU VI**

| Composition | TEST DE MOTTAGE | | | Test cristallisoir % reprise d'eau | Test bécher % reprise d'eau | Observations |
|---|---|---|---|---|---|---|
| | % mottage | Dureté (moyenne) en kg | IM | | | |
| Témoin non traité | 100 | >15 | >100 | 55 | 10 | dégranulation importante |
| I | free flowing | - | - | 15 | 3 | légère dégranulation en surface |
| J | free flowing | - | - | 9,6 | 1,5 | surface non dégradée |
| K | free flowing | - | - | 14 | 3 | légère dégranulation en surface |
| L | free flowing | - | - | 8,5 | 1,5 | surface non dégradée |

L'examen des résultats réunis dans le tableau VI montre l'amélioration apportée au niveau reprise d'humidité par la présence conforme à l'invention d'un dérivé PIBSA dans une composition antimottante à base de mélanges de sels d'amines d'esters phosphoriques et de sels d'amines d'acides alkylarylsulfoniques.

### EXEMPLE 4

Comme à l'exemple 3, on étudie l'influence de la présence d'un dérivé PIBSA conformément à l'invention dans une composition antimottante à base de mélanges de sels d'amines d'esters phosphoriques et de sels d'amines d'acides alkylarylsulfoniques.

L'engrais traité est un engrais complexe NPK de formule 15-11-22.

On prépare deux compositions respectivement M et N (N étant conforme à l'invention) dont la constitution résulte du tableau VII.

**TABLEAU VII**

| Nature des constituants | Composition (pourcentage en poids des constituants) | |
|---|---|---|
| | M | N |
| Alkyl phosphate de stéarylamine mélange 50% monoester 50% diester alkyl = n.C₁₂C₁₄ | 8 | 8 |
| Isopropyl naphtalène sulfonate de stéarylamine | 2 | 2 |
| Vaseline de point d'écoulement 40°C | 90 | 87 |
| Sel d'amine d'un dérivé PIBSA | - | 3 |

De la manière indiquée à l'exemple 1, on traite quatre échantillons de 20 kg du susdit engrais par 36 g (dose 1,8 kg par tonne d'engrais) des compositions M et N pour les deux premiers et par 24 g (dose de 1,2 kg par tonne d'engrais) des compositions M et N pour les deux suivants.

On procède aux tests de mottage et de reprise d'humidité.

La durée du test de mottage est de 5 jours sous une pression de 0,8 kg/cm² à 30°C.

La reprise d'humidité est réalisée à 30°C sous une humidité relative de 75% pendant 24 heures (test au cristallisoir).

Les résultats sont réunis dans le tableau VIII.

**TABLEAU VIII**

| Composition | Dosage kg/tonne | TEST DE MOTTAGE | | | Test cristallisoir % reprise d'eau |
|---|---|---|---|---|---|
| | | % mottage | Dureté (moyenne) en kg | IM | |
| Témoin non traité | - | 100 | >15 | >1500 | 30 |
| M | 1,8 | 20 | 3 | 60 | 15 |
| N | 1,8 | 20 | 3 | 60 | 7 |
| M | 1,2 | 40 | 5 | 200 | 14 |
| N | 1,2 | 40 | 5 | 200 | 7,5 |

L'examen des résultats réunis dans le tableau VIII montre l'amélioration apportée au niveau reprise d'humidité par la présence conforme à l'invention d'un dérivé PIBSA dans une composition antimottante à base de mélanges de sels d'amines d'esters phosphoriques et de sels d'amines d'acides alkylarylsulfoniques.

Toutefois, du point de vue de l'effet antimottant, la dose de 1,2 kg/tonne est nettement moins bonne que la dose de 1,8 kg/tonne.

### EXEMPLE 5

On étudie l'influence du dosage en reprenant les compositions K et L de l'exemple 3.

L'engrais traité est un nitrate d'ammonium calcaire (c'est-à-dire contenant du carbonate de calcium de manière à amener le titre en azote à 27%).

On procède comme à l'exemple 3 en traitant huit échantillons de 20 kg d'engrais respectivement avec des doses de 1, puis de 0,8, puis de 0,6, puis de 0,4 kg de composition K par tonne d'engrais pour les quatre premiers, puis respectivement avec des doses de 1, puis de 0,8, puis de 0,6, puis de 0,4 kg de composition L par tonne d'engrais.

On effectue le test de mottage et le test de reprise d'humidité au cristallisoir, comme à l'exemple 3.

Les résultats enregistrés sont réunis dans le tableau IX.

**TABLEAU IX**

| Composition | Dosage kg/tonne | TEST DE MOTTAGE | | | Test cristallisoir % reprise d'eau |
|---|---|---|---|---|---|
| | | % mottage | Dureté (moyenne) en kg | IM | |
| K | 1 | 23 | 2,5 | 57,5 | 14 |
| K | 0,8 | 25 | 2,5 | 62,5 | 12 |
| K | 0,6 | 30 | 3 | 90 | 14 |
| K | 0,4 | 75 | 6 | 450 | 18 |
| L | 1 | 25 | 2,6 | 65 | 8 |
| L | 0,8 | 23 | 2,5 | 57,5 | 6 |
| L | 0,6 | 30 | 3 | 93 | 8 |
| L | 0,4 | 80 | 6 | 480 | 13 |
| Témoin non traité | - | 100 | >15 | >1500 | 50 |

L'examen des résultats réunis dans le tableau IX montre que, pour l'engrais traité, la dose efficace de composition K ou L se situe entre 0,6 et 1 kg/tonne d'engrais.

## Revendications

1. Composition simultanément antimottante et hydrophobante pour sels, engrais simples et complexes, caractérisée par le fait qu'elle comporte:
- d'une part, un produit antimottant choisi parmi les amines grasses, les sels d'amines d'esters phosphoriques, les sels d'amines d'acides alkylarylsulfoniques et leurs mélanges et
- d'autre part, une substance antimottante capable de conférer aux sels, engrais simples et complexes traités une résistance suffisante à la reprise d'humidité, cette substance étant constituée par le produit de la réaction d'un alcool, d'une amine ou d'une alcanolamine, avec un acide polyalkényl-succinique ou son anhydride portant un groupe hydrocarboné ayant de 20 à 500 atomes de carbone, représentés respectivement par les formules suivantes: 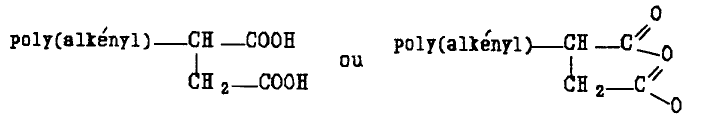 de préférence avec l'acide polyisobutényl-succinique également connu sous l'appellation PIBSA ou son anhydride portant un groupe hydrocarboné ayant de 20 à 500 atomes de carbone.

2. Composition selon la revendication 1, caractérisée par le fait que l'amine grasse est choisie dans le groupe de celles représentées par la formule RNH₂ dans laquelle R est un groupe alkyle ou alkylène, linéaire ou ramifié, ayant de 10 à 24 atomes de carbone et, de préférence, dans le groupe constitué par les amines grasses hydrogénées ayant des chaînes alkyle en C₁₆ à C₂₂.

3. Composition selon la revendication 1, caractérisée par le fait que l'acide ester phosphorique est un composé pouvant être préparé par réaction directe d'un composé à groupement hydroxyle tel qu'un alcool, un alcoylphénol ou un alcoylnaphtol avec par exemple l'anhydride phosphorique, ledit composé étant représenté par les formules générales: 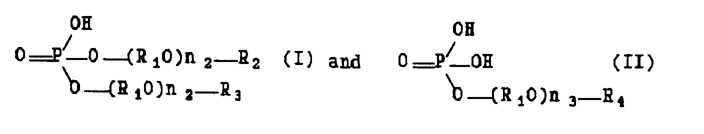 dans lesquelles
- R₁ représente un groupement alcoylène ayant de 2 à 4 atomes de carbone,
- R₂, R₃, R₄ représentent chacun un groupe alcoyle ayant de 8 à 20 atomes de carbone ou un groupe alcoylaryle dont la partie alcoylée a de 8 à 12 atomes de carbone,
- n₁, n₂, n₃ représentent un nombre de 0 à 15 et préférentiellement de 0 à 5.

4. Composition selon la revendication 1, caractérisée par le fait que l'acide alkylarylsulfonique est choisi dans le groupe comprenant les acides mono-, di- ou trisulfoniques dont la partie aromatique, de préférence benzoïque ou naphtalénique, plus particulièrement naphtalénique, est mono- ou polyalcoyle substitué, le degré de substitution étant un degré moyen correspondant aux rapports molaires alcoyle/aryle utilisés pour la synthèse, étant entendu que, pour chacun des degrés de substitution envisagés, à savoir généralement de 1 à 4, il est possible de se trouver en présence de mélanges complexes d'isomères d'acides sulfoniques, le nombre total d'atomes de carbone de la partie alcoyle ne dépassant de préférence pas 16 dans les mélanges en question.

5. Composition selon la revendication 1, caractérisée par le fait qu'elle comprend une combinaison d'un ou plusieurs sels d'amines d'acides alcoyl-aryl-sulfoniques et d'un ou plusieurs sels d'amines d'esters de phosphates acides, en présence éventuellement d'un excès d'amine.

6. Composition selon l'une des revendications 1 à 5, caractérisée par le fait qu'elle comprend de 5 à 35%, de préférence de 5 à 20% et, plus préférentiellement encore, de 5 à 15% en poids de la substance antimottante choisie parmi les amines grasses, les sels d'amines d'esters phosphoriques, les sels d'amines d'acides alkylarylsulfoniques et leurs mélanges, et de 0,1 à 10%, de préférence de 1 à 5% en poids de la substance antimottante constituée par le produit de la réaction d'un alcool ou d'une amine avec un acide ou anhydride carboxylique portant un groupe hydrocarboné ayant de 20 à 500 atomes de carbone.

7. Composition selon l'une des revendications 1 à 6, caractérisée par le fait qu'elle comporte de 55 à 95%, de préférence de 75 à 95%, ou encore plus préférentiellement de 80 à 92% en poids d'agents de formulation constitué par les huiles et/ou cires.

8. Procédé propre à conférer à des sels, engrais simples et complexes, des propriétés antimottantes et une résistance suffisante à la reprise d'humidité, caractérisé par le fait que l'on applique par pulvérisation sur lesdits sels, engrais simples et complexes, une quantité efficace de la composition selon l'une des revendications 1 à 7.

9. Procédé selon la revendication 8, caractérisé par le fait que l'on applique la composition selon l'une des revendications 1 à 7 à une température à laquelle elle est liquide en une quantité de 200 à 4000 g par tonne de sel, engrais simple ou complexe, de préférence en une quantité de 300 à 2000 g par tonne de sel, engrais simple ou complexe et, plus préférentiellement encore, en une quantité de 300 à 1500 g par tonne de sel, engrais simple ou complexe.

10. Sels, engrais simples et complexes caractérisés par le fait que leurs particules constitutives comportent un revêtement qui est à base de la composition selon l'une des revendications 1 à 7.

## Claims

1. Composition, which is simultaneously anticlumping and water-repellent, for salts, simple and complex fertilizers, characterized by the fact that it contains:
- on the one hand, an anticlumping product chosen from fatty amines, amine salts of phosphoric esters, amine salts of alkylarylsulphonic acids and mixtures thereof, and
- on the other hand, an anticlumping substance capable of imparting a sufficient resistance towards moisture uptake to the treated salts, simple and complex fertilizers, this substance consisting of the product of the reaction of an alcohol, an amine or an alkanolamine, with a polyalkenyl-succinic acid or the anhydride thereof bearing a hydrocarbon group having from 20 to 500 carbon atoms, represented by the following formulae: 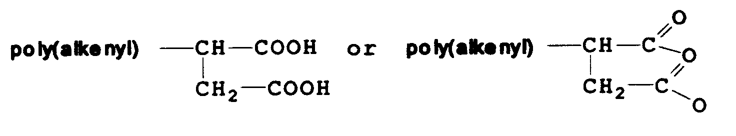 preferably with polyisobutenyl-succinic acid, also known as PIBSA or the anhydride thereof bearing a hydrocarbon group having from 20 to 500 carbon atoms.

2. Composition according to claim 1, characterized by the fact that the fatty amine is selected from the group of amines represented by the formula RNH₂ in which R is a linear or branched alkyl or alkylene group having from 10 to 24 carbon atoms and, preferably, from the group consisting of the hydrogenated fatty amines having C₁₆ to C₂₂ alkyl chains.

3. Composition according to claim 1, characterized by the fact that the phosphoric acid ester is a compound which may be prepared by direct reaction of a compound comprising a hydroxyl group, such as an alcohol, an alkylphenol or an alkylnaphthol, with, for example, phosphoric anhydride, the said compound being represented by the general formulae: 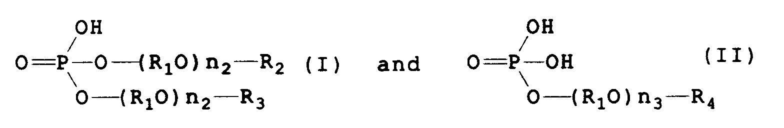 in which
- R₁ represents an alkylene group having from 2 to 4 carbon atoms,
- R₂, R₃ and R₄ each represent an alkyl group having from 8 to 20 carbon atoms or an alkylaryl group in which the alkyl part has from 8 to 12 carbon atoms,
- n₁, n₂ and n₃ represent a number from 0 to 15 and preferably from 0 to 5.

4. Composition according to claim 1, characterized by the fact that the alkylarylsulfonic acid is selected from the group comprising mono-, di- or trisulphonic acids of which the aromatic, preferably benzoic or naphthalenic, more particularly naphthalenic, part is mono- or polyalkyl-substituted, the degree of substitution being an average degree corresponding to the alkyl/aryl molar ratios used for the synthesis, it being understood that, for each of the degrees of substitution envisaged, namely generally from 1 to 4, it is possible to have complex mixtures of sulphonic acid isomers, the total number of carbon atoms in the alkyl part preferably not exceeding 16 in the mixtures in question.

5. Composition according to claim 1, characterized by the fact that it comprises a combination of one or more amine salts of alkylarylsulphonic acids and of one or more amine salts of acid phosphate esters, optionally in the presence of an excess of amine.

6. Composition according to one of claims 1 to 5, characterized by the fact that it comprises from 5 to 35%, preferably from 5 to 20% and, even more preferably, from 5 to 15% by weight of the anticlumping substance selected from fatty amines, amine salts of phosphoric esters, amine salts of alkylarylsulphonic acids and mixtures thereof, and from 0.1 to 10%, preferably from 1 to 5%, by weight of the anticlumping substance consisting of the product of the reaction of an alcohol or an amine with a carboxylic acid or anhydride bearing a hydrocarbon group having from 20 to 500 carbon atoms.

7. Composition according to one of claims 1 to 6, characterized in that it contains from 55 to 95%, preferably from 75 to 95%, or more preferably from 80 to 92% by weight of formulation agents consisting of oils and/or waxes.

8. Process capable of imparting anticlumping properties and a sufficient resistance towards moisture uptake to salts, simple and complex fertilizers, characterized by the fact that an effective amount of the composition according to one of claims 1 to 7 is applied to the said salts, simple and complex fertilizers, by spraying.

9. Process according to claim 8, characterized by the fact that the composition according to one of claims 1 to 7 is applied, at a temperature at which it is liquid, in an amount of from 200 to 4000 g per ton of salt, simple or complex fertilizer, preferably in an amount of from 300 to 2000 g per ton of salt, simple or complex fertilizer and, even more preferably, in an amount of from 300 to 1500 g per ton of salt, simple or complex fertilizer.

10. Salts, simple and complex fertilizers, characterized by the fact that the constituent particles thereof comprise a coating which is based on the composition according to one of claims 1 to 7.

## Patentansprüche

1. Zusammensetzung, die auf Salze und Ein- und Mehrnährstoffdünger gleichzeitig klumpenverhindernd und hydrophobierend wirkt, **dadurch gekennzeichnet, daß** sie
- einerseits ein klumpenverhinderndes Mittel, das aus den Fettaminen, Salzen von Phosphorsäureesteraminen, Salzen von Alkylarylsulfonsäureaminen und ihren Gemischen ausgewählt ist, und
- andererseits eine klumpenverhindernde Substanz, die in der Lage ist, behandelten Salzen und Bin- und Mehrnährstoffdüngern eine ausreichende Beständigkeit gegenüber Feuchtigkeitsaufnahme zu verleihen, umfaßt, wobei diese Substanz aus dem Reaktionsprodukt eines Alkohols, Amins oder Alkanolamins mit einer Polyalkenylbernsteinsäure oder derem Anhydrid, die/das einen Kohlenwasserstoffrest mit 20 bis 500 Kohlenstoffatomen trägt und jeweils durch eine der folgenden Formeln 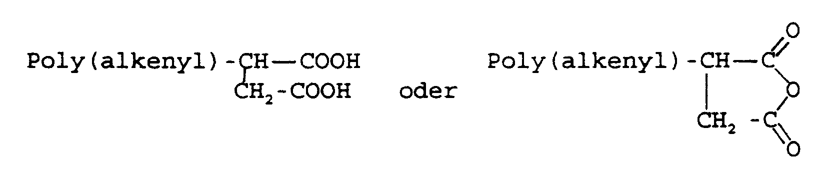 dargestellt ist, und vorzugsweise mit der auch unter dem Akronym PIBSA bekannten Polyisobutenylbernsteinsäure oder derem Anhydrid, die/das einen Kohlenwasserstoffrest mit 20 bis 500 Kohlenstoffatomen trägt, besteht.

2. Zusammensetzung nach Anspruch 1, **dadurch gekennzeichnet, daß** das Fettamin aus der Gruppe der Fettamine, die durch die Formel RNH₂ dargestellt sind, in welcher R ein geradkettiger oder verzweigter Alkyl- oder Alkylenrest mit 10 bis 24 Kohlenstoffatomen ist, und vorzugsweise aus der Gruppe, die aus hydrierten Fettaminen mit C₁₆- bis C₂₂-Alkylketten besteht, ausgewählt ist.

3. Zusammensetzung nach Anspruch 1, **dadurch gekennzeichnet, daß** der Phosphorsäureester eine Verbindung ist, die durch direkte Umsetzung einer Verbindung mit einer Hydroxylgruppe wie eines Alkohols, Alkylphenols oder Alkylnaphthols mit beispielsweise Phosphorsäureanhydrid hergestellt werden kann, wobei die Verbindung durch die allgemeinen Formeln 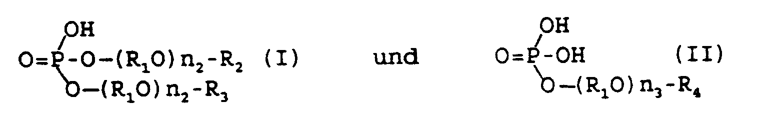 dargestellt wird, in denen
- R₁ einen Alkylenrest mit 2 bis 4 Kohlenstoffatomen bedeutet,
- R₂, R₃ und R₄ jeweils einen Alkylrest mit 8 bis 20 Kohlenstoffatomen oder einen Alkylarylrest, dessen Alkylteil 8 bis 12 Kohlenstoffatome besitzt, bedeuten und
- n₁, n₂ und n₃ eine Zahl von 0 bis 15 und vorzugsweise von 0 bis 5 bedeuten.

4. Zusammensetzung nach Anspruch 1, **dadurch gekennzeichnet, daß** die Alkylarylsulfonsäure aus der Gruppe ausgewählt ist, welche die Mono-, Di- oder Trisulfonsäuren umfaßt, deren aromatischer Teil, der vorzugsweise aus einem Phenylrest oder naphthalinischen Rest und insbesondere naphthalinischem Rest besteht, mono- oder polyalkylsubstituiert ist, wobei der Substitutionsgrad ein mittlerer ist, der den für die Synthese eingesetzten Alkyl/Aryl-Molverhältnissen entspricht, und wobei es für jeden der vorgesehenen Substitutionsgrade, nämlich im allgemeinen 1 bis 4, möglich ist, daß komplexe Sulfonsäureisomerengemische vorliegen und in diesen Gemischen die Gesamtzahl der Kohlenstoffatome des Alkylteils vorzugsweise 16 nicht übersteigt.

5. Zusammensetzung nach Anspruch 1, **dadurch gekennzeichnet, daß** sie eine Kombination aus einem oder mehreren Salzen von Alkylarylsulfonsäureaminen und einem oder mehreren Salzen von Phosphorsäureesteraminen, gegebenenfalls in Gegenwart eines Aminüberschusses, enthält.

6. Zusammensetzung nach einem der Ansprüche 1 bis 5, **dadurch gekennzeichnet, daß** sie 5 bis 35 Gew.-%, vorzugsweise 5 bis 20 Gew.-% und noch bevorzugter 5 bis 15 Gew.-% der klumpenverhindernden Substanz, die aus den Fettaminen, Salzen von Phosphorsäureesteraminen, Salzen von Alkylarylsulfonsäureaminen und ihren Gemischen ausgewählt ist, und 0,1 bis 10 Gew.-% und vorzugsweise 1 bis 5 Gew.-% der klumpenverhindernden Substanz enthält, die aus dem Reaktionsprodukt eines Alkohols oder Amins mit einer Carbonsäure oder einem Carbonsäureanhydrid, die/das einen Kohlenwasserstoffrest mit 20 bis 500 Kohlenstoffatomen trägt, besteht.

7. Zusammensetzung nach einem der Ansprüche 1 bis 6, **dadurch gekennzeichnet, daß** sie 55 bis 95 Gew.-%, vorzugsweise 75 bis 95 Gew.-% oder noch bevorzugter 80 bis 92 Gew.-% Formulierungshilfsmittel enthält, die aus Ölen und/oder Wachsen bestehen.

8. Verfahren, welches geeignet ist, Salzen und Ein- und Mehrnährstoffdüngern klumpenverhindernde Eigenschaften und ausreichende Beständigkeit gegenüber Feuchtigkeitsaufnahme zu verleihen und das **dadurch gekennzeichnet ist, daß** auf diesen Salzen und Ein- und Mehrnährstoffdüngern eine wirksame Menge der Zusammensetzung nach einem der Ansprüche 1 bis 7 durch Versprühen aufgebracht wird.

9. Verfahren nach Anspruch 8, **dadurch gekennzeichnet, daß** die Zusammensetzung nach einem der Ansprüche 1 bis 7 bei einer Temperatur, bei welcher sie flüssig ist, in einer Menge von 200 bis 4 000 g, vorzugsweise 300 bis 2 000 g und noch bevorzugter 300 bis 1 500 g pro Tonne des Salzes oder des Ein- bzw. Mehrnährstoffdüngers aufgebracht wird.

10. Salze, Ein- und Mehrnährstoffdünger, die **dadurch gekennzeichnet sind, daß** die sie bildenden Teilchen eine Beschichtung besitzen, welche die Zusammensetzung nach einem der Ansprüche 1 bis 7 zur Grundlage hat.
